(19) Europäisches Patentamt
European Patent Office
Office européen des brevets

(11) **EP 4 506 892 A1**

(12) **EUROPEAN PATENT APPLICATION**
published in accordance with Art. 153(4) EPC

(43) Date of publication:
**12.02.2025 Bulletin 2025/07**

(51) International Patent Classification (IPC):
*G06T 7/20* (2017.01)

(21) Application number: **23777613.3**

(22) Date of filing: **29.01.2023**

(86) International application number:
**PCT/CN2023/073710**

(87) International publication number:
**WO 2023/185234 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.04.2022 CN 202210350472**

(71) Applicant: **Beijing Jingdong Qianshi Technology Co., Ltd.**
**Beijing 100176 (CN)**

(72) Inventors:
• **FU, Kui**
  **Beijing 100176 (CN)**
• **LIU, Yang**
  **Beijing 100176 (CN)**
• **GUO, Mingjie**
  **Beijing 100176 (CN)**

(74) Representative: **Prinz & Partner mbB**
**Patent- und Rechtsanwälte**
**Rundfunkplatz 2**
**80335 München (DE)**

(54) **IMAGE PROCESSING METHOD AND APPARATUS, AND ELECTRONIC DEVICE AND STORAGE MEDIUM**

(57) An image processing method, an image processing apparatus, an electronic device and a storage medium are provided and relate to the technical field of artificial intelligence. The method includes: acquiring a first image and a second image of a target area, specifically, multiple objects placed in a piled form exist in the target area, and the first image and the second image correspond to different image acquisition moments; according to the first image and the second image, determining first information and second information, specifically, the first information represents a change status in external contours of the multiple objects between the first image and the second image, and the second information represents a change status in internal textures of the multiple objects between the first image and the second image; and according to the first information and the second information, determining whether any of the multiple objects is moved.

```
┌─────────────────────────────────────────────────────────┐
│  Acquire a first image and a second image of a target area │  101
└─────────────────────────────────────────────────────────┘
                          │
                          ▼
┌─────────────────────────────────────────────────────────┐
│  According to the first image and the second image, determine first │  102
│  information and second information                        │
└─────────────────────────────────────────────────────────┘
                          │
                          ▼
┌─────────────────────────────────────────────────────────┐
│  According to the first information and the second information, determine │  103
│  whether multiple objects are moved                       │
└─────────────────────────────────────────────────────────┘
```

**FIG. 1**

EP 4 506 892 A1

**Description**

CROSS-REFERENCE TO RELATED APPLICATION

This application is proposed on the basis of Chinese Patent Application No. 202210350472.4 filed with the China National Intellectual Property Administration (CNIPA) on Apr. 2, 2022 and claims priority to the Chinese Patent Application No. 202210350472.4, the content of which is incorporated herein by reference in its entirety.

TECHNICAL FIELD

The present disclosure relates to the field of artificial intelligence technology, and in particular to an image processing method, an image processing apparatus, an electronic device and a storage medium.

BACKGROUND

In some business scenarios, it is necessary to determine whether an object has been moved. For example, supply chain finance is an important business innovation direction in today's logistics field. In the supply chain finance business, logistics companies cooperate with banks and trust each other to provide services to merchants in the supply chain field. One of the important services is that merchants mortgage their goods to banks to apply for loans. Since logistics companies have advantages in warehousing, they provide the venue for mortgage of goods. In this process, an important task of logistics companies is to ensure the safety of goods, that is, to ensure that the state of the goods is not changed in any form by anyone without permission, such as the goods being moved out of the warehouse. Only by doing this can reliable services be provided to merchants and banks and the smooth operation of supply chain finance business be ensured.

However, in the related art, there is no effective solution for how to intelligently determine whether an object has been moved.

SUMMARY

To solve the related technical problems, an image processing method, an image processing apparatus, an electronic device and a storage medium are provided according to embodiments of the present disclosure.

The technical solutions according to the embodiments of the present disclosure are implemented as follows.

An image processing method is provided according to embodiments of the present disclosure, which includes:

acquire a first image and a second image of a target area, specifically, multiple objects placed in a piled form exist in the target area, and the first image and the second image correspond to different image acquisition moments;

determine first information and second information according to the first image and the second image, specifically, the first information represents a change status in external contours of the multiple objects between the first image and the second image, and the second information represents a change status in internal textures of the multiple objects between the first image and the second image; and

determine whether any of the multiple objects is moved according to the first information and the second information.

In the above solution, the determining first information according to the first image and the second image includes:

binarizing the first image by using a first model to obtain a third image; and binarizing the second image by using the first model to obtain a fourth image, specifically, the first model is trained by using a semantic segmentation algorithm, pixel values of pixels corresponding to the multiple objects in the third image and the fourth image are first values, and pixel values of pixels other than the pixels corresponding to the multiple objects are second values; and determining the first information by comparing the fourth image with the third image.

In the above solution, the determining the first information by comparing the fourth image with the third image includes:

determining multiple first coefficients according to the third image and the fourth image, specifically, each first coefficient represents whether a pixel value of one pixel point in the third image is identical to a pixel value of a corresponding one pixel point in the fourth image; and

determining the first information by using the multiple first coefficients.

In the above solution, the determining the first information by using the multiple first coefficients includes:

determining a second coefficient by using the multiple first coefficients, specifically, the second coefficient represents a degree of matching between the third image and the fourth image; and

determining whether the second coefficient is greater than a first threshold, specifically, in responding to the second coefficient being greater than the first threshold, the first information represents that a change occurs in the external contours of the multiple objects between the first image and the second image; or, in responding to the second coefficient being less than or equal to the first threshold, the first information represents that no change occurs in the external contours of the multiple objects between the first image and the second image.

In the above solution, the image processing method further includes:

determining a first probability, a second probability, a third probability and a fourth probability of the first model, specifically, the first probability represents a probability that the first model identifies an object in an input image as an object; the second probability represents a probability that the first model identifies an object in an input image as a non-object; the third probability represents a probability that the first model identifies a non-object in an input image as an object; the fourth probability represents a probability that the first model identifies a non-object in an input image as a non-object; and

determining the first threshold by using the first probability, the second probability, the third probability and the fourth probability.

In the above solution, the determining second information according to the first image and the second image includes:

binarizing the first image by using a second model to obtain a fifth image; and binarizing the second image by using the second model to obtain a sixth image, specifically, the second model is trained by using an edge detection algorithm, pixel values of pixel points corresponding to edges in the fifth image and the sixth image are first values, and pixel values of pixel points corresponding to non-edges are second values; and

determining the second information by using at least the fifth image and the sixth image.

In the above solution, the determining the second information by using at least the fifth image and the sixth image includes:

binarizing the first image by using a first model to obtain a third image; and binarizing the second image by using the first model to obtain a fourth image, specifically, the first model is trained by using a semantic segmentation algorithm; pixel values of pixel points corresponding to the multiple objects in the third image and the fourth image are first values, and pixel values of pixel points other than the pixel points corresponding to the multiple objects are second values; and

determining the second information by using the third image, the fourth image, the fifth image and the sixth image.

In the above solution, the determining the second information by using the third image, the fourth image, the fifth image and the sixth image includes:

element-wise multiplying the third image and the fifth image to obtain a seventh image; and element-wise multiplying the fourth image and the sixth image to obtain an eighth image; and

determining the second information by comparing the seventh image with the eighth image.

In the above solution, the determining the second information by comparing the seventh image with the eighth image includes:

dividing the seventh image based on a preset rule to obtain multiple first grids; and dividing the eighth image based on the preset rule to obtain multiple second grids; and

determining multiple third coefficients according to the multiple first grids and the multiple second grids, specifically, each of the multiple third coefficients represents a degree of matching between a first grid and a corresponding second grid; and

determining the second information by using the multiple third coefficients.

In the above solution, the determining the second information by using the multiple third coefficients includes:

determining whether each of the multiple third coefficients is greater than a second threshold,

specifically, in responding to a third coefficient greater than the second threshold existing, the second information represents that a change occurs in the internal textures of the multiple objects between the first image and the second image; or, in responding to each of the multiple third coefficients being less than or equal to the second threshold, the second information represents that no change occurs in the internal textures of the multiple objects between the first image and the second image.

In the above solution, the image processing method further includes:

determining a fifth probability, a sixth probability, a seventh probability and an eighth probability of the second model, specifically, the fifth probability represents a probability that the second model identifies an edge in an input image as an edge; the sixth probability represents a probability that the second model identifies an edge in an input image as a non-edge; the seventh probability represents a probability that the second model identifies a non-edge in an input image as an edge; and the eighth probability represents a probability that the second model identifies a non-edge in an input image as a non-edge; and

determining the second threshold by using the fifth probability, the sixth probability, the seventh probability and the eighth probability.

In the above solution, the determining whether any of the multiple objects is moved according to the first information and the second information includes:

in responding to the first information representing that a change occurs in the external contours of the multiple objects between the first image and the second image, and/or in responding to the second information representing that a change occurs in the internal textures of the multiple objects between the first image and the second image, determining that at least one of the multiple objects has been moved;
or,

in responding to the first information representing that no change occurs in the external contours of the multiple objects between the first image and the second image and the second information representing that no change occurs in the internal textures of the multiple objects between the first image and the second image, determining that none of the multiple objects is moved.

In the above solution, the image processing method further includes:
in responding to determining that at least one of the multiple objects is moved, issuing alarm information.
Specifically, the second information is determined by using multiple third coefficients; each of the multiple third coefficients represents a degree of matching between a first grid and a corresponding second grid; the first image corresponds to multiple first grids; the second image corresponds to multiple second grids; in responding to the second information representing that a change occurs in the internal textures of the multiple objects between the first image and the second image, the alarm information includes at least one grid identifier; each grid identifier corresponds to a third coefficient greater than the second threshold; and the at least one grid identifier is configured to locate a moved object.
In the above solution, the acquiring a first image and a second image of a target area includes:

acquiring a ninth image and a tenth image of a first area, specifically, the first area at least includes the target area, and the ninth image and the tenth image correspond to different image acquisition moments;

determining at least one second area in the first area according to the ninth image and the tenth image, specifically, multiple objects placed in a piled form exist in the second area; and

determining a target area from the at least one second area, and cropping the ninth image and the tenth image based on the target area to obtain the first image and the second image.

In the above solution, the determining at least one second area in the first area according to the ninth image and the tenth image includes:
determining at least one second area in the first region by using the ninth image, the tenth image and a third model; specifically, the third model is trained by using a target detection algorithm.

An image processing apparatus is further provided according to embodiments of the present disclosure, which includes:

a first processing unit configured to acquire a first image and a second image of a target area, specifically, multiple objects placed in a piled form exist in the target area, and the first image and the second image correspond to different image acquisition moments;

a second processing unit configured to determine first information and second information according to the first image and the second image, specifically, the first information represents a change status in external contours of the multiple objects between the first image and the second image, and the second information represents a change status in internal textures of the multiple objects between the first image and the second image; and

a third processing unit configured to determine whether any of the multiple objects is moved according to the first information and the second information.

An electronic device is further provided according to embodiments of the present disclosure, which includes: a processor and a memory for storing a computer program executable on the processor.
Specifically, the processor is configured to execute the step of the method according to any one of the embodiments when running the computer program.
A storage medium storing a computer program is further provided according to embodiments of the present disclosure, specifically, the computer program, when being executed by a processor, implements the step of the method according to any one of the embodiments.
In the image processing method, the image processing apparatus, the electronic device and the storage medium according to the embodiments of the present disclosure, a first image and a second image of a target area are acquired, multiple objects placed in a piled form exist in the target area, and the first image and the second image correspond to different image acquisition moments; first information and second information are determined according to the first image and the second image, the first information represents a change status in external contours of the multiple objects between the first image and the second image, and the second information represents a change status in internal textures of the multiple objects between the first image and the second image; and whether any of the multiple objects is moved is determined according to the first information and the second information. In the solution provided in the embodiment of the present disclosure, for a target area where multiple objects are placed in a piled form, a change status in the positions of the objects is identified from both overall and local perspectives based on images acquired at different times. In other words, it is determined whether any of the multiple objects is moved based on a change status in the external contours of the multiple objects in the images (i.e., overall) and a change status in the internal textures of the multiple objects in the images (i.e., local). In this way, the state of the objects can be monitored through computer vision technology (i.e., processing the images of the target area), thereby intelligently determining whether any of the objects is moved, thereby avoiding the waste of human resources due to manual inspections. Moreover, compared with manual inspections, by identifying changes in the positions of the objects from both overall and local perspectives, it is possible to identify subtle object movement events that are difficult for the human eye to detect, thereby improving the accuracy of the results of determining whether any of the objects is moved.

BRIEF DESCRIPTION OF DRAWINGS

FIG. 1 is a schematic diagram of a flow chart of an image processing method according to an embodiment of the present disclosure;

FIG. 2 is a schematic diagram of contour information and texture information of goods (i.e., objects) in an application embodiment of the present disclosure;

FIG. 3 is a schematic diagram of goods area detection in an application embodiment of the present disclosure;

FIG. 4 is a schematic diagram of goods area segmentation in an application embodiment of the present disclosure;

FIG. 5 is a schematic diagram of goods texture detection in an application embodiment of the present disclosure;

FIG. 6 is a schematic diagram of the structure of an image processing apparatus according to an embodiment of the present disclosure; and

FIG. 7 is a schematic diagram of the structure of an electronic device according to an embodiment of the present disclosure.

DETAILED DESCRIPTION

The present disclosure is further described in detail hereinafter in conjunction with the drawings and embodiments.

In the related art, whether an object has been moved is generally determined through manual inspection, such as monitoring goods in a warehouse through manual inspection. This method will result in a waste of human resources, and it is difficult for the human eye to detect some subtle object movement events.

Based on this, in various embodiments of the present disclosure, for a target area where multiple objects are placed in a piled form, changes in the positions of the objects are identified from both overall and local perspectives based on images acquired at different times. In other words, it is determined whether any of the multiple objects is moved based on a change status in the external contours of the multiple objects in the images (i.e., overall) and a change status in the internal textures of the multiple objects in the images (i.e., local). In this way, the state of the objects can be monitored through computer vision technology (i.e., processing the images of the target area), thereby intelligently determining whether any of the objects is moved, thereby avoiding the waste of human resources due to manual inspections. Moreover, compared with manual inspections, by identifying changes in the positions of the objects from both overall and local perspectives, it is possible to identify subtle object movement events that are difficult for the human eye to detect, thereby improving the accuracy of the results of determining whether any of the objects is moved.

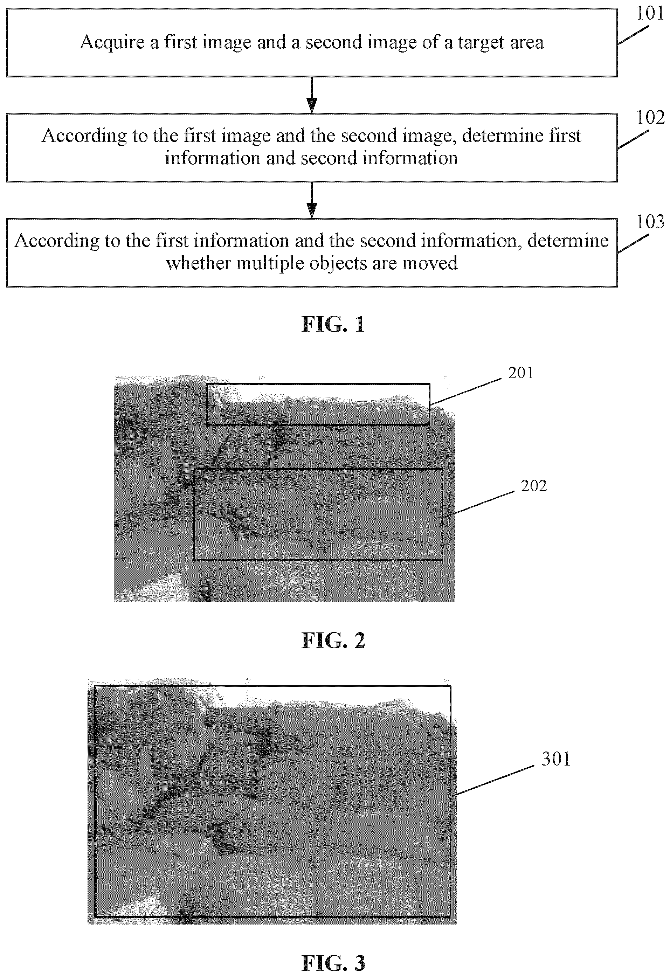

An image processing method is provided according to embodiments of the present disclosure, which is applied to an electronic device (such as a server). As shown in FIG. 1, the method includes: steps 101 to 103.

Step 101 may include acquiring a first image and a second image of a target area.

Here, multiple objects placed in a piled form exist in the target area; the first image and the second image correspond to different image acquisition moments.

Step 102 may include determining first information and second information according to the first image and the second image.

Here, the first information represents a change status in external contours of the multiple objects between the first image and the second image; the second information represents a change status in internal textures of the multiple objects between the first image and the second image.

Step 103 may include determining whether any of the multiple objects is moved according to the first information and the second information.

The first image corresponds to a first image acquisition moment, and the second image corresponds to a second image acquisition moment. It can be understood that the determining whether any of the multiple objects is moved refers to determining whether any of the multiple objects is moved within a time range from the first image acquisition moment to the second image acquisition moment.

In practical applications, since the multiple objects are placed in a piled form, the multiple objects can be regarded as an integral body. When an object located at the edge of the multiple objects is moved, external contours of the multiple objects in the second image change as compared with external contours of the multiple objects in the first image. When an object located inside the multiple objects is moved, internal textures of the multiple objects in the second image change as compared with internal textures of the multiple objects in the first image. The internal textures may be understood as information such as outlines and outer packaging patterns of the internal object located internally among the multiple objects.

In step 101, In practical applications, the acquiring a first image and a second image of a target area may include: acquiring from an image acquisition apparatus a first image and a second image of a target area acquired by the image acquisition apparatus, where the position of the image acquisition apparatus and an image acquisition angle are fixed.

In practical applications, in some business scenarios, there may be multiple objects placed in a piled form at multiple locations, for example, goods piled in a warehouse. In order to improve the efficiency of image processing, the image acquisition apparatus can acquire an image containing multiple piles of objects. The electronic device can obtain the image containing multiple piles of objects from the image acquisition apparatus, and detect the area where each pile of objects is located from the image, and execute the steps 101 to 103 for each detected area, so as to determine whether there is any moved object in each pile of objects.

Based on this, in one embodiment, the acquiring a first image and a second image of a target area may include:

acquiring a ninth image and a tenth image of a first area; specifically, the first area at least includes the target area; and the ninth image and the tenth image correspond to different image acquisition moments;

determining at least one second area in the first area according to the ninth image and the tenth image; specifically, multiple objects placed in a piled form exist in the second area; and

determining a target area from the at least one second area, and cropping the ninth image and the tenth image based on the target area to obtain the first image and the second image.

Here, it can be understood that at least one pile of multiple objects placed in a piled form is present in the first area, and one pile of multiple objects placed in a piled form is present in each second area.

In practical applications, the electronic device can obtain from the image acquisition apparatus the ninth image and the tenth image acquired by the image acquisition apparatus, the ninth image corresponds to the first image acquisition time, and the tenth image corresponds to the second image acquisition time. In addition, in acquiring the ninth image and the tenth image, the position of the image acquisition apparatus may be fixed or not, and the image acquisition angle of the image acquisition apparatus may be fixed or not, which may be set according to requirements and is not limited in this embodiment of the present disclosure.

In practical applications, it can be understood that when the position of the image acquisition apparatus and/or the image acquisition angle are not fixed, the ninth image and the tenth image are required to be processed by image comparison or the like to enable the object in the ninth image to correspond to the object in the tenth image.

In practical applications, a pre-trained model may be used to determine each pile of objects in the first area, that is, to determine at least one second area in the first area.

Based on this, in one embodiment, the determining at least one second area in the first area according to the ninth image and the tenth image may include:
determining at least one second area in the first region by using the ninth image, the tenth image and a third model; specifically, the third model is trained by using a target detection algorithm.

In practical applications, the target detection algorithm may include yolo_v5, faster-rcnn, centerNet, etc., which can be set according to requirements, and the embodiment of the present disclosure is not limited to this.

In practical applications, the third model is required to be trained in advance. Specifically, a training data set can be determined, the training data set may include a predetermined number (for example, 2000) images of a preset area (which can be set according to requirements, and it is required that multiple objects placed in a piled form exist in the area) acquired by the image acquisition apparatus, each pile of objects in each image is framed, and the coordinate information corresponding to each pile of objects is recorded (i.e., annotated); after the annotation is completed, the annotated data and the target detection algorithm are used to train the third model.

In practical applications, it can be understood that when the position and/or image acquisition angle of the image acquisition apparatus are not fixed, it is necessary to input the ninth image into the third model to obtain at least one candidate second area output by the third model, and then input the tenth image into the third model to obtain at least one candidate second area output by the third model; by associating the at least one candidate second area output by the third model based on the ninth image with the at least one candidate second area output by the third model based on the tenth image, at least one second area is determined (a candidate second area output by the third model twice and corresponding to the same pile of objects can be determined as a second area).

When the position and image acquisition angle of the image acquisition apparatus are fixed, it is only necessary to input the ninth image into the third model to obtain at least one second area output by the third model.

In practical applications, the second area can be a rectangle. Using the third model to detect the rectangular area occupied by each pile of objects from the image acquired by the image acquisition apparatus can ensure that the subsequent image processing process is not interfered by external information unrelated to the object.

In step 102, in practical applications, the first image and the second image may be processed using a pre-trained model to determine the first information.

Based on this, in one embodiment, the determining first information according to the first image and the second image may include:

binarizing the first image by using a first model to obtain a third image; and binarizing the second image by using the first model to obtain a fourth image; specifically, the first model is trained by using a semantic segmentation algorithm; the pixel values of the pixels corresponding to the multiple objects in the third image and the fourth image are first values, and the pixel values of other pixels (i.e., pixels not corresponding to the objects) except the pixels corresponding to the multiple objects are second values; and

determining the first information by comparing the fourth image with the third image.

In practical applications, the first value may be 1, and the second value may be 0.

In practical applications, the semantic segmentation algorithm may include deeplab _v3, U-net, etc., which can be set according to requirements, and is not limited in the embodiment of the present disclosure.

In practical applications, the first model is required to be trained in advance. Specifically, a training data set can be determined, and the training data set can include images (which can be the same as the images used to train the third model) of a predetermined value (for example, 2000) of a preset area (which can be set according to requirements, and it is required that multiple objects placed in a piled form exist in the area) acquired by the image acquisition apparatus, and the coordinate position of the external contour of each pile of objects in each image is annotated; and the first model is trained by using the annotated data and the semantic segmentation algorithm.

In one embodiment, the determining the first information by comparing the fourth image with the third image may include:

determining multiple first coefficients according to the third image and the fourth image; each first coefficient represents whether a pixel value of one pixel point in the third image is identical to a pixel value of a corresponding one pixel point in the fourth image; and

determining the first information by using the multiple first coefficients.

In practical applications, the specific method of determining the first coefficient can be set according to requirements. Exemplarily, when the pixel value of one pixel point in the third image is the same as the pixel value of a corresponding one pixel point in the fourth image, the first coefficient may be equal to 0; when the pixel value of a pixel point in the third image is different from the pixel value of the pixel point in the fourth image, the first coefficient may be equal to 1.

In one embodiment, the determining the first information by using the multiple first coefficients may include:

determining a second coefficient by using the multiple first coefficients; specifically, the second coefficient represents a degree of matching between the third image and the fourth image; and

determining whether the second coefficient is greater than a first threshold; when the second coefficient is greater than the first threshold, the first information represents that a change occurs in the external contours of the multiple objects between the first image and the second image; or, when the second coefficient is less than or equal to the first threshold, the first information represents that no change occurs in the external contours of the multiple objects between the first image and the second image.

In practical applications, the specific method of calculating the second coefficient can be set according to requirements. It can be understood that, the larger the second coefficient is, the lower the degree of matching between the third image and the fourth image is.

In practical applications, the first threshold value can be determined by statistically analyzing the effect of the first model on a preset verification data set.

Based on this, in one embodiment, the method may further include:

determining a first probability, a second probability, a third probability and a fourth probability of the first model; specifically, the first probability represents the probability that the first model identifies an object in an input image (such as the first image and the second image) as an object, that is, the probability of determining the pixel value of the pixel point corresponding to the object as a first value in the process of binarizing the input image; the second probability represents the probability that the first model identifies an object in an input image as a non-object, that is, the probability of determining the pixel value of the pixel point corresponding to the object as a second value in the process of binarizing the input image; the third probability represents the probability that the first model identifies a non-object in an input image as an object, that is, the probability of determining the pixel value of the pixel point corresponding to the non-object as a first value in the process of binarizing the input image; the fourth probability represents the probability that the first model identifies a non-object in an input image as a non-object, that is, the probability of determining the pixel value of the pixel point corresponding to the non-object as a second value in the process of binarizing the input image; and

determining the first threshold by using the first probability, the second probability, the third probability and the fourth probability.

Here, the first probability, the second probability, the third probability and the fourth probability may be determined by statistically analyzing the effect of the first model on a preset verification data set.

In practical applications, the specific method of determining the first threshold value by using the first probability, the second probability, the third probability and the fourth probability can be set according to requirements. Exemplarily, reference may be made to ideas such as Bernoulli distribution, binomial distribution, central limit theorem, Gaussian distribution, and $3\sigma$ principle for the using the first probability, the second probability, the third probability and the fourth probability to determine the first threshold.

In step 102, in practical applications, the first image and the second image may be processed using a pre-trained model to determine the second information.

Based on this, in one embodiment, the determining second information according to the first image and the second image may include:

binarizing the first image by using a second model to obtain a fifth image; and binarizing the second image using the second model to obtain a sixth image; specifically, the second model is trained by using an edge detection algorithm; pixel values of pixel points corresponding to edges in the fifth image and the sixth image are first values, and pixel values of pixel points corresponding to non-edges are second values; and

determining the second information by using at least the fifth image and the sixth image.

Here, the first value may be 1, and the second value may be 0.

In practical applications, the edge detection algorithm may include PiDiNet, etc., which can be set according to specific requirements, and is not limited in the embodiment of the present disclosure.

In practical applications, the second model can be pre-trained, or the second model can be an open source model.

In practical applications, in order to further ensure that the subsequent image processing flow is not interfered by external information irrelevant to the object, the second information can be determined by using the third image, the fourth image, the fifth image and the sixth image.

Based on this, in one embodiment, the determining the second information by using at least the fifth image and the sixth image may include:

binarizing the first image by using a first model to obtain a third image; and binarizing the second image by using the first model to obtain a fourth image; specifically, the first model is trained by using a semantic segmentation algorithm; pixel values of pixel points corresponding to the multiple objects in the third image and the fourth image are first values, and pixel values of pixel points other than the pixel points corresponding to the multiple objects are second values; and

determining the second information by using the third image, the fourth image, the fifth image and the sixth image.

Specifically, in one embodiment, the determining the second information by using the third image, the fourth image, the fifth image and the sixth image may include:

element-wise multiplying the third image and the fifth image to obtain a seventh image; and element-wise multiplying the fourth image and the sixth image to obtain an eighth image; and

determining the second information by comparing the seventh image with the eighth image.

Here, the third image and the fifth image are element-wise multiplied, and the fourth image and the sixth image are element-wise multiplied, so as to eliminate the interference of external information irrelevant to the objects. In other words, the seventh image and the eighth image do not contain external information irrelevant to the objects. Determining the second information by comparing the seventh image with the eighth image can ensure that the subsequent image processing process is not interfered by external information irrelevant to the objects, thereby further improving the accuracy of the judgment result.

In practical applications, there may be a large number of objects placed in a piled form. In order to further improve the accuracy of the determination result, the seventh image and the eighth image can be first divided into grids, and then the grids of the seventh image and the grids of the eighth image can be compared in units of grids to determine the change status of the local texture in the multiple objects placed in a piled form.

Based on this, in one embodiment, the determining the second information by comparing the seventh image with the eighth image includes:

dividing the seventh image based on a preset rule to obtain multiple first grids; and dividing the eighth image based on the preset rule to obtain multiple second grids;

determining multiple third coefficients according to the multiple first grids and the multiple second grids; specifically, each third coefficient represents a degree of matching between a first grid and a corresponding second grid; and

determining the second information by using the multiple third coefficients.

Here, the preset rule can be set according to requirements. Exemplarily, the preset rule may include: dividing the image into $H \times W$ grids, where H and W are both integers greater than 0, H and W may be the same or different, and specific values of H and W may be set based on experience.

Specifically, in one embodiment, the determining the second information by using the multiple third coefficients may include:

determining whether each third coefficient is greater than a second threshold; specifically,

when a third coefficient greater than the second threshold exists, the second information represents that a change occurs in the internal textures of the multiple objects between the first image and the second image; or, when each third coefficient is less than or equal to the second threshold, the second information represents that no change occurs in the internal textures of the multiple objects between the first image and the second image.

In practical applications, the second threshold can be determined by statistically analyzing the effect of the second model on a preset verification data set.

Based on this, in one embodiment, the method may further include:

determining a fifth probability, a sixth probability, a seventh probability and an eighth probability of the second model; specifically, the fifth probability represents the probability that the second model identifies an edge in an input image (such as the first image and the second image) as an edge, that is, the probability of determining a pixel value of a pixel point corresponding to the edge as a first value in the process of binarizing the input image; the sixth probability represents the probability that the second model identifies an edge in an input image as a non-edge, that is, the probability of determining a pixel value of a pixel point corresponding to the edge as a second value in the process of binarizing the input image; the seventh probability represents the probability that the second model identifies a non-edge in an input image as an edge, that is, the probability of determining a pixel value of a pixel point corresponding to the non-edge as a first value in the process of binarizing the input image; and the eighth probability represents the probability that the second model identifies a non-edge in an input image as a non-edge, that is, the probability of determining a pixel value of a pixel point corresponding to the non-edge as a second value in the process of binarizing the input image; and

determining the second threshold by using the fifth probability, the sixth probability, the seventh probability and the eighth probability.

Here, the fifth probability, the sixth probability, the seventh probability and the eighth probability can be determined by statistically analyzing the effect of the second model on a preset verification data set.

In practical applications, the specific method of determining the second threshold value by using the fifth probability, the sixth probability, the seventh probability and the eighth probability can be set according to requirements. Exemplarily, reference may be made to Bernoulli distribution, binomial distribution, central limit theorem, Gaussian distribution, $3\sigma$ principle and other ideas for the using the fifth probability, the sixth probability, the seventh probability and the eighth probability to determine the second threshold.

With respect to step 103, in one embodiment, the determining whether any of the multiple objects is moved according to the first information and the second information may include:

when the first information represents that a change occurs in the external contours of the multiple objects between the first image and the second image, and/or when the second information represents that a change occurs in the internal textures of the multiple objects between the first image and the second image, determining that at least one of the multiple objects has been moved;

or,

when the first information represents that no change occurs in the external contours of the multiple objects between the first image and the second image and the second information represents that no change occurs in the internal textures of the multiple objects between the first image and the second image, determining that none of the multiple objects is moved.

In practical applications, when it is determined that at least one of the multiple objects is moved, alarm information may be sent to the target device to prompt the user that there is a moved object in the target area.

Based on this, in one embodiment, the method may further include:

when it is determined that at least one of the multiple objects is moved, sending alarm information.

Specifically, the second information is determined by using multiple third coefficients; each third coefficient represents the degree of matching between a first grid and a corresponding second grid; the first image corresponds to multiple first grids; the second image corresponds to multiple second grids; when the second information represents that a change occurs in the internal textures of the multiple objects between the first image and the second image, the alarm information includes at least one grid identifier; each grid identifier corresponds to a third coefficient greater than the second threshold; and the at least one grid identifier is configured to locate a moved object.

In practical applications, the specific sending object (i.e., the target device) of the alarm information can be set according to requirements, which is not limited in the embodiment of the present disclosure.

In practical applications, based on the image processing method according to the embodiment of the present disclosure, whether there is a moved object in a specified area (for example, the first area) can be monitored. Specifically, the ninth image can be used as the original state image, that is, the ninth image can reflect the original state of the object (for example, the state when the object is put into storage); the tenth image can be used as the current state image, that is, the tenth image can reflect the current state of the object. In addition, the ninth image can be updated according to the business status corresponding to the multiple objects (for example, goods are newly warehoused or shipped), and the tenth image can be updated periodically or upon being triggered. The periodic update may include the image acquisition apparatus acquiring the tenth image of the first area according to a preset period (which can be set according to requirements, such as n seconds, where n is an integer greater than 0) and sending it to the electronic device; the triggered update may include the electronic device obtaining the tenth image from the image acquisition apparatus when the electronic device receives a detection instruction from other devices (such as a terminal).

In the image processing method according to the embodiment of the present disclosure, a first image and a second image of a target area are acquired, multiple objects placed in a piled form exist in the target area, and the first image and the second image correspond to different image acquisition moments; first information and second information are determined according to the first image and the second image, the first information represents a change status in external contours of the multiple objects between the first image and the second image, and the second information represents a change status in internal textures of the multiple objects between the first image and the second image; and whether the multiple objects are moved is determined according to the first information and the second information. In the solution provided in the embodiment of the present disclosure, for a target area where multiple objects are placed in a piled form, changes in the positions of the objects are identified from both overall and local perspectives based on images acquired at different times. In other words, it is determined whether any of the multiple objects is moved based on the change status in the external contours of the multiple objects in the images (i.e., overall) and the change status in the internal textures of the multiple objects in the images (i.e., local). In this way, the state of the objects can be monitored through computer vision technology (i.e., processing the images of the target area), thereby intelligently determining whether any of the objects is moved, thereby avoiding the waste of human resources due to manual inspections. Moreover, compared with manual inspections, by identifying changes in the positions of the objects from both overall and local perspectives, it is possible to identify subtle object movement events that are difficult for the human eye to detect, thereby improving the accuracy of the results of determining whether the objects is moved.

The present disclosure is further described in detail hereinafter in conjunction with application embodiments.

In this application embodiment, a computer vision-based warehouse goods (i.e., the above-mentioned objects) monitoring solution is provided, which identifies changes in goods from both overall and local perspectives. The change of the goods in the overall view is the external contour change, and the change in local view is some texture change of corresponding area of the goods in the image. Goods are generally stored in a piled form in a warehouse. If goods at the edge of the goods area in the image are moved, the contour information of the corresponding position will change (i.e., the first information mentioned above). The contour information is as shown in a block 201 in FIG. 2. If the goods inside the goods area in the image are moved, the texture information of the corresponding position will be changed (i.e., the second information mentioned above), and the texture information is as shown in a block 202 in FIG. 2.

In this application embodiment, in order to effectively identify the above phenomenon (i.e., the change in contour information and the change in texture information), the warehouse goods monitoring solution includes the following steps 1 to 4.

Step 1 may include using an area detection model (i.e., the third model mentioned above) to perform goods area detection;

Step 2 may include using a segmentation model (i.e., the first model mentioned above) to perform goods area segmentation;

Step 3 may include using an edge detection model (i.e., the second model mentioned above) to perform goods texture detection; and

Step 4 may include final matching.

The above four steps complement each other. The specific implementation of each step is explained below.

First, the specific implementation of the using an area detection model (i.e., the third model mentioned above) to perform goods area detection is described.

In this application embodiment, the function of the area detection model is to detect the rectangular area occupied by the goods (i.e., the second area mentioned above) from the images (for example, the ninth image and the tenth image mentioned above) acquired by means of the monitoring camera (i.e., the image acquisition apparatus mentioned above) to ensure that the subsequent process is not disturbed by external information unrelated to the goods. The specific effect is as shown in FIG. 3, where each pile of goods is framed to obtain a corresponding rectangular frame (for example, a rectangular frame 301).

In this application embodiment, the area detection model uses the yolo_v5 algorithm to perform area detection. In training the area detection model, about 2,000 images detected by cameras in the warehouse are selected, each pile of goods in each image is framed, and the coordinate information corresponding to each rectangular frame is recorded. After the annotation is completed, the area detection model is trained by using the annotated data. The area detection model finally obtained can detect each pile of goods in the newly acquired image and calibrate the corresponding rectangular block.

Next, the specific implementation of the using a segmentation model (i.e., the first model mentioned above) to perform goods area segmentation is described.

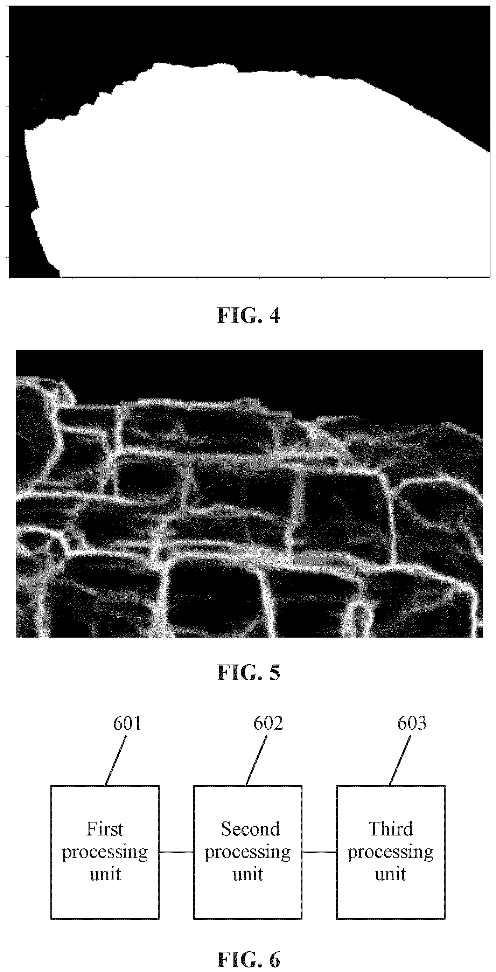

In this application embodiment, the role of the segmentation model is to obtain an external contour of each pile of goods to determine whether the contour information of the goods has changed. The segmentation model uses the deeplab _v3 algorithm for image processing. The output of the segmentation model (as shown in FIG. 4) is a matrix of the same size as the input image (for example, the third image and the fourth image mentioned above). The value of the pixel position corresponding to the goods in the matrix is 1 (that is, the first value mentioned above), and the value of the pixel position corresponding to the rest (that is, the non-goods part) is 0 (that is, the second value mentioned above).

In this application embodiment, it is necessary to obtain annotated data in advance and use the annotated data to train the segmentation model. The method of obtaining annotated data may include: selecting about 2,000 images detected by cameras in the warehouse (images used in the training of the area detection model may be used), annotating the coordinate position of the external contour of each pile of goods in the image, and training the segmentation model based on the annotations. After the training is completed, the segmentation model will analyze the new input image and generate a 0, 1 matrix of the same size as the input image, where the area corresponding to the goods is 1 and the area corresponding to the rest is 0.

Third, the specific implementation of the using an edge detection model (i.e., the second model mentioned above) to perform goods texture detection is described.

In this application embodiment, the role of the edge detection model is to identify local textures in the input image (for example, the first image and the second image mentioned above) to determine whether the texture information has changed from the original one. The edge detection model uses PiDiNet to extract important textures by identifying areas where mutations occur inside the image. The output image of the edge detection model is as shown in FIG. 5, which is a 0, 1 matrix of the same size as the original image. The pixel position value corresponding to the edge is 1 (i.e., the first value mentioned above), and the pixel position values corresponding to the rest positions are 0 (i.e., the second value mentioned above).

In practical applications, since the edge detection is a general algorithm and is not limited to edge detection of goods, the edge detection model can be an open source model and does not need to be retrained.

Fourth, the final matching process is described in detail.

In this application embodiment, the three steps of goods area detection, goods area segmentation and goods texture detection all serve the final identification (i.e., final matching) process. After the goods enter the warehouse, the camera used to monitor the goods is used to obtain an original image of the goods. Then, subsequent images of the goods are acquired periodically. Each time an image is obtained subsequently, it is necessary to compare it with the original image to determine whether the goods are moved. The original image of the goods and the images obtained subsequently of the goods all need to go through three steps: the goods area detection, the goods area segmentation and the goods texture detection and then are subjected to the final comparison.

In practical applications, in warehouse scenarios, the position and angle of monitoring cameras are generally fixed. Therefore, the goods area detection can be performed only on the original goods image, and the obtained detection frame is also used in the goods images obtained subsequently. However, The original goods images and the subsequently acquired goods images all need to go through goods area segmentation and goods texture detection.

In practical applications, when the status of the goods is updated, for example, goods are newly warehoused or shipped, and the original image can be updated.

In this application embodiment, after completing the above steps (i.e., the goods area detection, goods area segmentation and goods texture detection), it is required to compare the original goods image (denoted as S, i.e., the ninth image mentioned above) and the subsequently obtained goods image (denoted as D, i.e., the tenth image mentioned above): first comparing the contour information, and then comparing the local information. The image may contain multiple piles of goods, and the comparison needs to be performed separately for each pile of goods. Since the detection frame (i.e., the second area) corresponding to each pile of goods has been obtained in the goods area detection process, the S and D images are cropped according to the detection frame to obtain sub-images of each pile of goods, which are represented as $S(1)$, $S(2)$, ...$S(n)$ and $D(1)$, $D(2)$, ...$D(n)$ respectively. Assuming that the sub-image $S(i)$ (i.e., the first image mentioned above) and $D(i)$ (i.e., the second image mentioned above) are to be compared, the comparison process of the contour information includes steps as follows.

1) Segmented images corresponding to the sub-images $S(i)$ and $D(i)$ are acquired, and are denoted as $Sg(i)$ (i.e., the third image mentioned above) and $Dg(i)$ (i.e., the fourth image mentioned above).

2) The coefficient of difference (i.e. the second coefficient mentioned above) is calculated by the following formula:

$$\frac{\sum_{x,y} Sg(i)(x,y) \oplus Dg(i)(x,y)}{\sum_{x,y} 1} \quad (1)$$

where, (x, y) denotes the coordinates of a position in the image; $Sg(i)(x, y)$ and $Dg(i)(x, y)$ represent values corresponding to the position in the two segmented images (i.e., $Sg(i)$ and $Dg(i)$); $\oplus$ denotes an XOR operation. If the segmentation model has the same determination on whether a certain pixel in the original goods image and the later acquired image is part of the goods, the output of $Sg(i)(x,y) \oplus Dg(i)(x,y)$ (i.e., the first coefficient mentioned above) is 0, otherwise it is 1. The larger the value of the coefficient of difference, the less matched $Sg(i)$ and $Dg(i)$ are.

3) If the coefficient of difference is greater than a certain threshold (i.e., the first threshold mentioned above), it is determined that a pile of goods corresponding to the sub-image has moved.

The process of comparing texture information includes steps as follows.

1) Segmented images corresponding to sub-images $S(i)$ and $D(i)$ are acquired and are denoted as $Sg(i)$ and $Dg(i)$.

2) Edge images corresponding to the sub-images $S(i)$ and $D(i)$ (the output after using the edge detection model) are acquired and are denoted as $Se(i)$ (i.e., the fifth image mentioned above) and $De(i)$ (i.e., the sixth image mentioned above).

3) $Sg(i)$ and $Se(i)$ are element-wise multiplied to obtain $St(i)$ (i.e. the seventh image mentioned above); and $Dg(i)$ and $De(i)$ are element-wise multiplied to obtain $Dt(i)$ (i.e. the eighth image mentioned above).

4) $St(i)$ and $Dt(i)$ are each divided into H×W (i.e., the above preset strategy, H and W are both integers greater than 0, H and W can be the same or different) grids (i.e., the above grids), and the parts corresponding to each grid are denoted as $St(i)(h, w)$ and $Dt(i)(h, w)$; H and W can be set according to experience.

5) The coefficient of difference (i.e. the third coefficient mentioned above) is calculated for each grid part using the following formula:

$$\frac{\sum_{x,y} St(i)(h,w)(x,y) \oplus Dt(i)(h,w)(x,y)}{\sum_{x,y} 1} \quad (2)$$

where, the meanings of $St(i)(h, w)(x, y) \oplus Dt(i)(h, w)(x, y)$ and $Sg(i)(x, y) \oplus Dg(i)(x, y)$ are similar and will not be repeated here.

In addition, the reason for grid dividing first and then calculating the coefficient of difference is that the movement may only occur in a certain part. If the entire images are compared directly, the difference obtained will be relatively small, and it is difficult to accurately determine whether the goods are moved. Grid dividing can effectively solve this problem. Additionally, grid dividing can help to locate the exact location where movement occurs.

6) If the coefficient of difference is greater than a certain threshold (i.e., the second threshold mentioned above), it is determined that the corresponding part (i.e., the area) in the corresponding grid has moved.

From the above steps, it can be seen that both contour comparison and texture comparison require comparing the coefficient of difference with the corresponding threshold. The setting of threshold is generally a difficult problem. Therefore, in this application embodiment, statistical means are used to derive the threshold value to help make a more accurate determination.

In this application embodiment, when comparing the profile information, the derivation process of the threshold value (i.e., the first threshold value) is as follows.

The probabilities of the segmentation model identifying the goods part as the goods part, the goods part as other parts, the other parts as the goods part, and the other parts as other parts are obtained, and are respectively denoted as $p_{TT}$ (i.e., the first probability), $p_{TF}$ (i.e., the second probability), $p_{FT}$ (i.e., the third probability), and $p_{FF}$ (i.e., the fourth probability). These probability values can be obtained by statistically analyzing the effect of the segmentation model on the verification data set. For $Sg(i)(x, y) \oplus Dg(i)(x, y)$, it is assumed that its true value is denoted as $e(x, y)$, its value calculated by the model is $\hat{e}(x, y)$, and if the two sub-images match completely, then for any $(x, y)$, $e(x, y) = 0$, the probability of $\hat{e}(x, y)=0$ obtained by calculation can be expressed as:

$$P_R = P(\hat{e}(x,y) = 0, e(x,y) = 0) = p_{FF} \cdot p_{FF} + p_{TT} \cdot p_{TT} \quad (3)$$

where, the probability of $\hat{e}(x, y) = 1$ obtained by calculation can be expressed as:

$$P_P = P(\hat{e}(x,y) = 1, e(x,y) = 0) = 2 \cdot p_{FT} \cdot p_{FF} + 2 \cdot p_{TF} \cdot p_{TT} \quad (4)$$

Therefore, in a case where $e(x, y) = 0$, $\hat{e}(x, y)$ obeys Bernoulli distribution $Bernouli\left(\frac{P_R}{P_R+P_P}, \frac{P_P}{P_R+P_P}\right)$, while $\Sigma_{x,y}\hat{e}(x, y)$ obeys binomial distribution $B\left(\Sigma_{x,y} 1, \frac{P_P}{P_R+P_P}\right)$, and according to the central limit theorem, which can be approximated by Gaussian distribution $N\left(\frac{P_P}{P_R+P_P}\Sigma_{x,y} 1, \frac{P_P \cdot P_R}{(P_R+P_P)^2}\Sigma_{x,y} 1\right)$. According to the $3\sigma$ principle, if the two images match completely, the maximum value of $\Sigma_{x,y}\hat{e}(x, y)$ should not exceed $\frac{P_P}{P_R+P_P}\Sigma_{x,y} 1 + \frac{3\sqrt[3]{P_P \cdot P_R \cdot \Sigma_{x,y} 1}}{P_R+P_P}$, therefore, the threshold of the coefficient of difference (the first threshold) is set as:

$$\frac{\frac{P_P}{P_R+P_P}\Sigma_{x,y} 1 + \frac{3\sqrt[3]{P_P \cdot P_R \cdot \Sigma_{x,y} 1}}{P_R+P_P}}{\Sigma_{x,y} 1} \quad (5)$$

In this application embodiment, in comparing texture information, the derivation process of the threshold (i.e., the second threshold) is as follows.

The probabilities of the edge detection model identifying an edge as an edge, an edge as a non-edge, a non-edge as an edge, and a non-edge as a non-edge are obtained, and are denoted as $q_{TT}$ (i.e., the fifth probability), $q_{TF}$ (i.e., the sixth probability), $q_{FT}$ (i.e., the seventh probability), and $q_{FF}$ (i.e., the eighth probability). These probability values can be obtained by statistically analyzing the effect of the edge detection model on the verification data set. For $Sg(i)(h, w)(x, y) \oplus Dg(i)(h, w)(x, y)$, it is assumed that its true value is denoted as $g(x, y)$, the value calculated by the model is $\hat{g}(x, y)$. If the two grids match completely, then for any $(x, y)$, $g(x, y)=0$, the probability of $\hat{g}(x, y)=0$ obtained by calculation can be expressed as:

$$Q_R = P(\hat{g}(x,y) = 0, g(x,y) = 0) = q_{FF} \cdot q_{FF} + q_{TT} \cdot q_{TT} \quad (6)$$

where, the probability of $\hat{g}(x, y) = 1$ obtained by calculation can be expressed as:

$$Q_P = P(\hat{g}(x,y) = 1, g(x,y) = 0) = 2 \cdot q_{FT} \cdot q_{FF} + 2 \cdot q_{TF} \cdot q_{TT} \dots (7)$$

Continuing to repeat the same derivation process as deriving the threshold for contour comparison (i.e., the first threshold), it can be seen that the second threshold should be set as:

$$\frac{\frac{Q_P}{Q_R+Q_P}\sum_{x,y}1 + \sqrt[3]{\frac{Q_P \cdot Q_R \cdot \sum_{x,y}1}{Q_R+Q_P}}}{\sum_{x,y}1} \quad (8)$$

In this application embodiment, the specific flow of the image processing process is as follows:

1) Model training. Data annotation is performed according to a preset rule, the area detection model and the segmentation model are trained to obtain an edge detection model. Meanwhile, the verification data set is used to estimate the corresponding probability values $p_{TT}$, $p_{TF}$, $p_{FT}$ and $p_{FF}$ and $q_{TT}$, $q_{TP}$, $q_{FT}$ and $q_{FF}$ of the segmentation model and edge detection model respectively.

2) Goods area detection. After the goods are warehoused or the state of the goods is updated, the corresponding camera is used to acquire an original image of the goods, and the detection model is used to obtain the corresponding detection frame for each pile of goods.

3) Goods area segmentation. Goods area segmentation is performed for the original goods image to obtain the corresponding segmented images, and in a case where the goods state is not updated, this operation is only required to be performed once; goods area segmentation is performed for the periodically acquired goods images, to obtain the corresponding segmented images. This operation is required to be performed once each time a new image is acquired.

4) Goods texture detection. Edge detection algorithm is used to perform texture detection for the original goods image to obtain the corresponding edge images, and in a case where the goods state is not updated, this operation is only required to be performed once; edge detection is performed for the periodically acquired goods images, to obtain the corresponding edge images. This operation is required to be performed once each time a new image is acquired.

5) Contour contrast. Segmented sub-images $Sg(i)$ and $Dg(i)$ corresponding to each pair of sub-images $S(i)$ and $D(i)$ are obtained, their coefficient of difference (i.e., the second coefficient) is calculated, and the corresponding threshold (i.e., the first threshold) is derived. If the coefficient of difference is higher than a threshold, it is determined that the corresponding goods have been moved, an alarm is sent and manual verification is requested.

6) Texture contrast. Grids corresponding to each pair of sub-images $S(i)$ and $D(i)$ are obtained, and edge sub-images $St(i)(h, w)$ and $Dt(i)(h, w)$ corresponding to each grid, their coefficient of difference (i.e., the third coefficient) is calculated, and the corresponding threshold (i.e., the second threshold) is derived. If the coefficient of difference is higher than the threshold, it is determined that the corresponding area in the corresponding goods has been moved, an alarm is sent and manual verification is requested.

In the solution according to this application embodiment, a computer vision technology is used and monitoring cameras in the warehouse are employed to monitor the goods in the warehouse and whether they have been moved is determined; and image segmentation and edge detection technology are used to obtain the contour and texture information of the goods, and the states (i.e., positions) of the goods are compared based on these two types of information to determine whether the goods have been moved from both overall and local dimensions; in addition, a statistical method is further used to derive a threshold value for the difference between the original state and the post-acquired state of the goods, which helps to make a more accurate determination on whether the goods have been moved.

In the solution according to this application embodiment, the monitoring of the state (i.e., position) of the goods in the warehouse is realized based on computer vision technology. If the state of the goods is found to have changed (i.e., the position has changed), an alarm is sent in time to request manual verification. Since there are generally a large number of monitoring cameras in a warehouse, this method can make full use of existing resources and effectively reduce manpower consumption. Moreover, computer vision can also identify subtle changes that may hardly be perceived by the human eyes.

In order to implement the method of the embodiments of the present disclosure, an image processing apparatus is further provided according to embodiments of the present disclosure, which is arranged on an electronic device (for example, installed on a server), as shown in FIG. 6, and includes: a first processing unit 601, a second processing unit 602 and a third processing unit 603.

The first processing unit 601 is configured to acquire a first image and a second image of a target area, specifically, multiple objects placed in a piled form exist in the target area, and the first image and the second image correspond to different image acquisition moments.

The second processing unit 602 is configured to determine first information and second information according to the first image and the second image, specifically, the first information represents a change status in external contours of the multiple objects between the first image and the second image, and the second information represents a change status in internal textures of the multiple objects between the first image and the second image.

The third processing unit 603 is configured to determine whether any of the multiple objects is moved according to the first information and the second information.

In one embodiment, the second processing unit 602 is further configured to:

binarize the first image by using a first model to obtain a third image; and binarize the second image by using the first model to obtain a fourth image, specifically, the first model is trained by using a semantic segmentation algorithm, pixel values of pixels corresponding to the multiple objects in the third image and the fourth image are first values, and pixel values of pixels other than the pixels corresponding to the multiple objects are second values; and

determine the first information by comparing the fourth image with the third image.

In one embodiment, the second processing unit 602 is further configured to:

determine multiple first coefficients according to the third image and the fourth image, specifically, each first coefficient represents whether a pixel value of one pixel point in the third image is identical to a pixel value of a corresponding one pixel point in the fourth image; and

determine the first information by using the multiple first coefficients.

In one embodiment, the second processing unit 602 is further configured to:

determine a second coefficient by using the multiple first coefficients, specifically, the second coefficient represents a degree of matching between the third image and the fourth image; and

determine whether the second coefficient is greater than a first threshold, specifically, in responding to the second coefficient being greater than the first threshold, the first information represents that a change occurs in the external contours of the multiple objects between the first image and the second image; or, in responding to the second coefficient being less than or equal to the first threshold, the first information represents that no change occurs in the external contours of the multiple objects between the first image and the second image.

In one embodiment, the second processing unit 602 is further configured to:

determine a first probability, a second probability, a third probability and a fourth probability of the first model, specifically, the first probability represents a probability that the first model identifies an object in an input image as an object; the second probability represents a probability that the first model identifies an object in the input image as a non-object; the third probability represents a probability that the first model identifies a non-object in the input image as an object; the fourth probability represents a probability that the first model identifies a non-object in the input image as a non-object; and

determine the first threshold by using the first probability, the second probability, the third probability and the fourth probability.

In one embodiment, the second processing unit 602 is further configured to:

binarize the first image by using a second model to obtain a fifth image; and binarize the second image by using the second model to obtain a sixth image, specifically, the second model is trained by using an edge detection algorithm, pixel values of pixel points corresponding to edges in the fifth image and the sixth image are first values, and pixel values of pixel points corresponding to non-edges are second values; and

determine the second information by using at least the fifth image and the sixth image.

In one embodiment, the second processing unit 602 is further configured to:

binarize the first image by using a first model to obtain a third image; and binarize the second image by using the first model to obtain a fourth image, specifically, the first model is trained by using a semantic segmentation algorithm; pixel values of pixel points corresponding to the multiple objects in the third image and the fourth image are first values, and pixel values of pixel points other than the pixel points corresponding to the multiple objects are second values; and

determine the second information by using the third image, the fourth image, the fifth image and the sixth image.

In one embodiment, the second processing unit 602 is further configured to:

element-wise multiply the third image and the fifth image to obtain a seventh image; and element-wise multiply the fourth image and the sixth image to obtain an eighth image; and

determine the second information by comparing the seventh image with the eighth image.

In one embodiment, the second processing unit 602 is further configured to:

divide the seventh image based on a preset rule to obtain multiple first grids; and divide the eighth image based on the preset rule to obtain multiple second grids; and

determine multiple third coefficients according to the multiple first grids and the multiple second grids, specifically, each of the multiple third coefficients represents a degree of matching between a first grid and a corresponding second grid; and

determine the second information by using the multiple third coefficients.

In one embodiment, the second processing unit 602 is further configured to:
determine whether each of the multiple third coefficients is greater than a second threshold.
Specifically, in responding to a third coefficient greater than the second threshold existing, the second information represents that a change occurs in the internal textures of the multiple objects between the first image and the second image; or, in responding to each of the multiple third coefficients being less than or equal to the second threshold, the second information represents that no change occurs in the internal textures of the multiple objects between the first image and the second image.
In one embodiment, the second processing unit 602 is further configured to:

determine a fifth probability, a sixth probability, a seventh probability and an eighth probability of the second model, specifically, the fifth probability represents a probability that the second model identifies an edge in an input image as an edge; the sixth probability represents a probability that the second model identifies an edge in an input image as a non-edge; the seventh probability represents a probability that the second model identifies a non-edge in an input image as an edge; and the eighth probability represents a probability that the second model identifies a non-edge in an input image as a non-edge; and

determine the second threshold by using the fifth probability, the sixth probability, the seventh probability and the eighth probability.

In one embodiment, the third processing unit 603 is further configured to:

in responding to the first information representing that a change occurs in the external contours of the multiple objects between the first image and the second image, and/or in responding to the second information representing that a change occurs in the internal textures of the multiple objects between the first image and the second image, determine that at least one of the multiple objects has been moved;

or,

in responding to the first information representing that no change occurs in the external contours of the multiple objects between the first image and the second image and the second information representing that no change occurs in the internal textures of the multiple objects between the first image and the second image, determine that none of the multiple objects is moved.

In one embodiment, the image processing apparatus further includes a communication unit; and the third processing unit 603 is further configured to send alarm information through the communication module in responding to determining that at least one of the multiple objects is moved.

Specifically, the second information is determined by using multiple third coefficients; each of the multiple third coefficients represents a degree of matching between a first grid and a corresponding second grid; the first image corresponds to multiple first grids; the second image corresponds to multiple second grids; in responding to the second information representing that a change occurs in the internal textures of the multiple objects between the first image and the second image, the alarm information includes at least one grid identifier; each grid identifier corresponds to a third coefficient greater than the second threshold; and the at least one grid identifier is configured to locate a moved object.

In one embodiment, the first processing unit 601 is further configured to:

acquire a ninth image and a tenth image of a first area, specifically, the first area at least includes the target area, and the ninth image and the tenth image correspond to different image acquisition moments;

determine at least one second area in the first area according to the ninth image and the tenth image, specifically, multiple objects placed in a piled form exist in the second area; and

determine a target area from the at least one second area, and cropping the ninth image and the tenth image based on the target area to obtain the first image and the second image.

In one embodiment, the first processing unit 601 is further configured to determine at least one second area in the first region by using the ninth image, the tenth image and a third model; specifically, the third model is trained by using a target detection algorithm.

In practical applications, the communication unit may be embodied as a communication interface in an image processing apparatus; and the first processing unit 601, the second processing unit 602 and the third processing unit 603 may be embodied as processors in the image processing apparatus.

It should be noted that: when the image processing apparatus according to the above embodiment processes an image, the division of the above-mentioned program modules is only illustrative. In practical applications, the above-mentioned processing can be assigned to different program modules according to requirements, that is, the internal structure of the apparatus can be divided into different program modules to perform all or part of the processing described above. In addition, the image processing apparatus and the image processing method according to the above embodiments belong to the same concept, and the specific implementation process is detailed in the method embodiment, which is not repeated here.

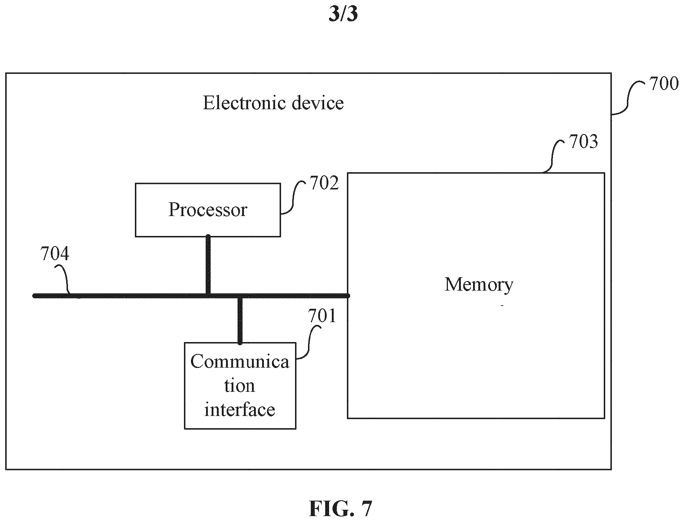

Based on the hardware implementation of the above program modules, and in order to implement the method of the embodiments of the present disclosure, an electronic device is further provided according to embodiments of the present disclosure, as shown in FIG. 7, the electronic device 700 includes: a communication interface 701, a processor 702 and a memory 703.

The communication interface 701 is capable of exchanging information with other electronic devices.

The processor 702 is connected to the communication interface 701, to implement information interaction with other electronic devices, and is configured to execute the method provided by one or more of the technical solutions described above when running a computer program.

The memory 703 stores a computer program that can be executed on the processor 702.

Specifically, the processor 702 is configured to:

acquire a first image and a second image of a target area, specifically, multiple objects placed in a piled form exist in the target area, and the first image and the second image correspond to different image acquisition moments;

determine first information and second information according to the first image and the second image, specifically, the first information represents a change status in external contours of the multiple objects between the first image and the second image, and the second information represents a change status in internal textures of the multiple objects between the first image and the second image; and

determine whether any of the multiple objects is moved according to the first information and the second information.

In one embodiment, the processor 702 is further configured to:

binarize the first image by using a first model to obtain a third image; and binarize the second image by using the first model to obtain a fourth image, specifically, the first model is trained by using a semantic segmentation algorithm, pixel values of pixels corresponding to the multiple objects in the third image and the fourth image are first values, and pixel values of pixels other than the pixels corresponding to the multiple objects are second values; and
determine the first information by comparing the fourth image with the third image.

In one embodiment, the processor 702 is further configured to:

determine multiple first coefficients according to the third image and the fourth image, specifically, each first coefficient represents whether a pixel value of one pixel point in the third image is identical to a pixel value of a corresponding one pixel point in the fourth image; and

determine the first information by using the multiple first coefficients.

In one embodiment, the processor 702 is further configured to:

determine a second coefficient by using the multiple first coefficients, specifically, the second coefficient represents a degree of matching between the third image and the fourth image; and

determine whether the second coefficient is greater than a first threshold, specifically, in responding to the second coefficient being greater than the first threshold, the first information represents that a change occurs in the external contours of the multiple objects between the first image and the second image; or, in responding to the second coefficient being less than or equal to the first threshold, the first information represents that no change occurs in the external contours of the multiple objects between the first image and the second image.

In one embodiment, the processor 702 is further configured to:

determine a first probability, a second probability, a third probability and a fourth probability of the first model, specifically, the first probability represents a probability that the first model identifies an object in an input image as an object; the second probability represents a probability that the first model identifies an object in an input image as a non-object; the third probability represents a probability that the first model identifies a non-object in an input image as an object; the fourth probability represents a probability that the first model identifies a non-object in an input image as a non-object; and

determine the first threshold by using the first probability, the second probability, the third probability and the fourth probability.

In one embodiment, the processor 702 is further configured to:

binarize the first image by using a second model to obtain a fifth image; and binarize the second image by using the second model to obtain a sixth image, specifically, the second model is trained by using an edge detection algorithm, pixel values of pixel points corresponding to edges in the fifth image and the sixth image are first values, and pixel values of pixel points corresponding to non-edges are second values; and

determine the second information by using at least the fifth image and the sixth image.

In one embodiment, the processor 702 is further configured to:

binarize the first image by using a first model to obtain a third image; and binarize the second image by using the first model to obtain a fourth image, specifically, the first model is trained by using a semantic segmentation algorithm; pixel values of pixel points corresponding to the multiple objects in the third image and the fourth image are first values, and pixel values of pixel points other than the pixel points corresponding to the multiple objects are second values; and

determine the second information by using the third image, the fourth image, the fifth image and the sixth image.

In one embodiment, the processor 702 is further configured to:

element-wise multiply the third image and the fifth image to obtain a seventh image; and element-wise multiply the fourth image and the sixth image to obtain an eighth image; and

determine the second information by comparing the seventh image with the eighth image.

In one embodiment, the processor 702 is further configured to:

divide the seventh image based on a preset rule to obtain multiple first grids; and divide the eighth image based on the preset rule to obtain multiple second grids; and

determine multiple third coefficients according to the multiple first grids and the multiple second grids, specifically, each of the multiple third coefficients represents a degree of matching between a first grid and a corresponding second grid; and

determine the second information by using the multiple third coefficients.

In one embodiment, the processor 702 is further configured to:
determine whether each of the multiple third coefficients is greater than a second threshold.
Specifically, in responding to a third coefficient greater than the second threshold existing, the second information represents that a change occurs in the internal textures of the multiple objects between the first image and the second image; or, in responding to each of the multiple third coefficients being less than or equal to the second threshold, the second information represents that no change occurs in the internal textures of the multiple objects between the first image and the second image.
In one embodiment, the processor 702 is further configured to:

determine a fifth probability, a sixth probability, a seventh probability and an eighth probability of the second model, specifically, the fifth probability represents a probability that the second model identifies an edge in an input image as an edge; the sixth probability represents a probability that the second model identifies an edge in an input image as a non-edge; the seventh probability represents a probability that the second model identifies a non-edge in an input image as an edge; and the eighth probability represents a probability that the second model identifies a non-edge in an input image as a non-edge; and

determine the second threshold by using the fifth probability, the sixth probability, the seventh probability and the eighth probability.

In one embodiment, the processor 702 is further configured to:

in responding to the first information representing that a change occurs in the external contours of the multiple objects between the first image and the second image, and/or in responding to the second information representing that a change occurs in the internal textures of the multiple objects between the first image and the second image, determine that at least one of the multiple objects has been moved;
or,

in responding to the first information representing that no change occurs in the external contours of the multiple objects between the first image and the second image and the second information representing that no change occurs in the internal textures of the multiple objects between the first image and the second image, determine that none of the multiple objects is moved.

In one embodiment, the processor 702 is further configured to send alarm information through the communication interface 701 in responding to determining that at least one of the multiple objects is moved, specifically, the second information is determined by using multiple third coefficients; each of the multiple third coefficients represents a degree of matching between a first grid and a corresponding second grid; the first image corresponds to multiple first grids; the second image corresponds to multiple second grids; in responding to the second information representing that a change occurs in the internal textures of the multiple objects between the first image and the second image, the alarm information includes at least one grid identifier; each grid identifier corresponds to a third coefficient greater than the second threshold; and the at least one grid identifier is configured to locate a moved object.

In one embodiment, the processor 702 is further configured to:

acquire a ninth image and a tenth image of a first area, specifically, the first area at least includes the target area, and the ninth image and the tenth image correspond to different image acquisition moments;

determine at least one second area in the first area according to the ninth image and the tenth image, specifically, multiple objects placed in a piled form exist in the second area; and

determine a target area from the at least one second area, and cropping the ninth image and the tenth image based on the target area to obtain the first image and the second image.

In one embodiment, the processor 702 is further configured to determine at least one second area in the first region by using the ninth image, the tenth image and a third model; specifically, the third model is trained by using a target detection algorithm.

It should be noted that: the specific process of the processor 702 performing the above operations is detailed in the method embodiment, which is not repeated here.

Apparently, in practical applications, the various components in the electronic device 700 are coupled together via a bus system 704. It can be understood that the bus system 704 is configured to achieve connection and communication between these components. The bus system 704 includes not only a data bus but also a power bus, a control bus and a status signal bus. However, for the sake of clarity, the various buses are annotated as the bus system 704 in FIG. 7.

The memory 703 in the embodiment of the present disclosure is used to store various types of data to support the operation of the electronic device 700. Examples of these data include any computer programs for operating on the electronic device 700.

The method disclosed in the embodiments of the present disclosure described above may be applied to the processor 702 or implemented by the processor 702. The processor 702 may be an integrated circuit chip having signal processing capabilities. In the process of implementation, the steps of the above method can be performed by an integrated logic circuit of hardware in the processor 702 or an instruction in the form of software. The processor 702 mentioned above may be a general-purpose processor, a digital signal processor (DSP), or other programmable logic devices, discrete gate or transistor logic devices, discrete hardware components, etc. The processor 702 can implement or execute the methods, steps and logic block diagrams disclosed in the embodiments of the present disclosure. A general purpose processor may be a microprocessor or any conventional processor or the like. The steps of the method disclosed in the embodiments of the present disclosure can be directly implemented as being executed by a hardware in a decoding processor, or can be implemented as being executed by a combination of hardware and software modules in the decoding processor. The software module may be located in a storage medium, and the storage medium is located in the memory 703. The processor 702 reads the information in the memory 703 and performs in combination with its hardware the steps of the method described above.

In an exemplary embodiment, the electronic device 700 can be implemented by one or more application specific integrated circuits (ASICs), DSPs, programmable logic devices (PLDs), complex programmable logic devices (CPLDs), field programmable gate arrays (FPGAs), general-purpose processors, controllers, micro controller units (MCUs), microprocessors, or other electronic components to execute the method described above.

It can be understood that the memory 703 in the embodiment of the present disclosure may be a volatile memory or a non-volatile memory, or may include both volatile and non-volatile memories. Specifically, the non-volatile memory can be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM); the magnetic surface memory can be a disk memory or a tape memory. The volatile memory can be a random access memory (RAM), which acts as an external cache. By way of example but not limitation, many forms of RAM are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchronous link dynamic random access memory (SLDRAM) and a direct rambus random access memory (DRRAM). The memory described in the embodiments of the present disclosure is intended to include, but is not limited to, these and any other suitable types of memory.

In an exemplary embodiment, it is further provided according to embodiments of the present disclosure a storage medium, namely, a computer storage medium, specifically a computer-readable storage medium, for example, including a memory 703 for storing a computer program, and the above-mentioned computer program can be executed by the processor 702 of the electronic device 700 to perform the steps described in the method described above. The computer-readable storage medium may be a memory such as FRAM, ROM, PROM, EPROM, EEPROM, Flash Memory, magnetic surface storage, optical disk, or CD-ROM.

It should be noted that: "first", "second", etc. are used to distinguish similar objects, and are not necessarily used to describe a specific order or sequence.

In addition, the technical solutions described in the embodiments of the present disclosure can be combined arbitrarily without conflict.

The above description is only a preferred embodiment of the present disclosure and is not intended to limit the protection scope of the present disclosure.

**Claims**

1. An image processing method, comprising:

   acquiring a first image and a second image of a target area, wherein a plurality of objects placed in a piled form exist in the target area, and the first image and the second image correspond to different image acquisition moments;
   determining first information and second information according to the first image and the second image, wherein the first information represents a change status in external contours of the plurality of objects between the first image and the second image, and the second information represents a change status in internal textures of the plurality of objects between the first image and the second image; and
   determining whether any of the plurality of objects is moved according to the first information and the second information.

2. The image processing method according to claim 1, wherein determining the first information according to the first image and the second image comprises:

   binarizing the first image by using a first model to obtain a third image; and binarizing the second image by using the first model to obtain a fourth image, wherein the first model is trained by using a semantic segmentation algorithm, pixel values of pixels corresponding to the plurality of objects in the third image and the fourth image are first values, and pixel values of pixels other than the pixels corresponding to the plurality of objects are second values; and
   determining the first information by comparing the fourth image with the third image.

3. The image processing method according to claim 2, determining the first information by comparing the fourth image with the third image comprises:

   determining a plurality of first coefficients according to the third image and the fourth image, wherein each first coefficient represents whether a pixel value of one pixel point in the third image is identical to a pixel value of a corresponding one pixel point in the fourth image; and
   determining the first information by using the plurality of first coefficients.

4. The image processing method according to claim 3, determining the first information by using the plurality of first coefficients comprises:

   determining a second coefficient by using the plurality of first coefficients, wherein the second coefficient represents a degree of matching between the third image and the fourth image; and
   determining whether the second coefficient is greater than a first threshold, wherein in a case where the second coefficient is greater than the first threshold, the first information represents that a change occurs in the external contours of the plurality of objects between the first image and the second image; or, in a case where the second coefficient is less than or equal to the first threshold, the first information represents that no change occurs in the external contours of the plurality of objects between the first image and the second image.

5. The image processing method according to claim 4, further comprising:

determining a first probability, a second probability, a third probability and a fourth probability of the first model, wherein the first probability represents a probability that the first model identifies an object in an input image as an object; the second probability represents a probability that the first model identifies an object in an input image as a non-object; the third probability represents a probability that the first model identifies a non-object in an input image as an object; the fourth probability represents a probability that the first model identifies a non-object in an input image as a non-object; and

determining the first threshold by using the first probability, the second probability, the third probability and the fourth probability.

6. The image processing method according to claim 1, wherein determining the second information according to the first image and the second image comprises:

binarizing the first image by using a second model to obtain a fifth image; and binarizing the second image by using the second model to obtain a sixth image, wherein the second model is trained by using an edge detection algorithm, pixel values of pixel points corresponding to edges in the fifth image and the sixth image are first values, and pixel values of pixel points corresponding to non-edges are second values; and

determining the second information by using at least the fifth image and the sixth image.

7. The image processing method according to claim 6, determining the second information by using at least the fifth image and the sixth image comprises:

binarizing the first image by using a first model to obtain a third image; and binarizing the second image by using the first model to obtain a fourth image, wherein the first model is trained by using a semantic segmentation algorithm; pixel values of pixel points corresponding to the plurality of objects in the third image and the fourth image are first values, and pixel values of pixel points other than the pixel points corresponding to the plurality of objects are second values; and

determining the second information by using the third image, the fourth image, the fifth image and the sixth image.

8. The image processing method according to claim 7, wherein determining the second information by using the third image, the fourth image, the fifth image and the sixth image comprises:

element-wise multiplying the third image and the fifth image to obtain a seventh image; and element-wise multiplying the fourth image and the sixth image to obtain an eighth image; and

determining the second information by comparing the seventh image with the eighth image.

9. The image processing method according to claim 8, wherein determining the second information by comparing the seventh image with the eighth image comprises:

dividing the seventh image based on a preset rule to obtain a plurality of first grids; and dividing the eighth image based on the preset rule to obtain a plurality of second grids; and

determining a plurality of third coefficients according to the plurality of first grids and the plurality of second grids, wherein each of the plurality of third coefficients represents a degree of matching between a first grid and a corresponding second grid; and

determining the second information by using the plurality of third coefficients.

10. The image processing method according to claim 9, wherein determining the second information by using the plurality of third coefficients comprises:

determining whether each of the plurality of third coefficients is greater than a second threshold,

wherein in a case where a third coefficient is greater than the second threshold existing, the second information represents that a change occurs in the internal textures of the plurality of objects between the first image and the second image; or, in a case where each of the plurality of third coefficients is less than or equal to the second threshold, the second information represents that no change occurs in the internal textures of the plurality of objects between the first image and the second image.

11. The image processing method according to claim 10, further comprising:

determining a fifth probability, a sixth probability, a seventh probability and an eighth probability of the second model, wherein the fifth probability represents a probability that the second model identifies an edge in an input image as an edge; the sixth probability represents a probability that the second model identifies an edge in an input image as a non-edge; the seventh probability represents a probability that the second model identifies a non-edge in an input image as an edge; and the eighth probability represents a probability that the second model identifies a non-edge in an input image as a non-edge; and

determining the second threshold by using the fifth probability, the sixth probability, the seventh probability and the eighth probability.

12. The image processing method according to any one of claims 1 to 11, wherein determining whether any of the plurality of objects is moved according to the first information and the second information comprises:

in a case where the first information representing that a change occurs in the external contours of the plurality of objects between the first image and the second image, and/or where the second information representing that a change occurs in the internal textures of the plurality of objects between the first image and the second image, determining that at least one of the plurality of objects is moved;

or,

in a case where the first information represents that no change occurs in the external contours of the plurality of objects between the first image and the second image, and the second information represents that no change occurs in the internal textures of the plurality of objects between the first image and the second image, determining that none of the plurality of objects is moved.

13. The image processing method according to claim 12, further comprising:

in responding to determining that at least one of the plurality of objects is moved, sending alarm information; wherein the second information is determined by using a plurality of third coefficients; each of the plurality of third coefficients represents a degree of matching between a first grid and a corresponding second grid; the first image corresponds to a plurality of first grids; the second image corresponds to a plurality of second grids; in a case where the second information represents that a change occurs in the internal textures of the plurality of objects between the first image and the second image, the alarm information comprises at least one grid identifier; each grid identifier corresponds to a third coefficient greater than the second threshold; and the at least one grid identifier is configured to locate a moved object.

14. The image processing method according to any one of claims 1 to 11, acquiring a first image and a second image of a target area comprises:

acquiring a ninth image and a tenth image of a first area, wherein the first area at least comprises the target area, and the ninth image and the tenth image correspond to different image acquisition moments; determining at least one second area in the first area according to the ninth image and the tenth image, wherein a plurality of objects placed in a piled form exist in the second area; and determining a target area from the at least one second area, and cropping the ninth image and the tenth image based on the target area to obtain the first image and the second image.

15. The image processing method according to claim 14, determining at least one second area in the first area according to the ninth image and the tenth image comprises:

determining at least one second area in the first region by using the ninth image, the tenth image and a third model; wherein the third model is trained by using a target detection algorithm.

16. An image processing apparatus, comprising:

a first processing unit configured to acquire a first image and a second image of a target area, wherein a plurality of objects placed in a piled form exist in the target area, and the first image and the second image correspond to different image acquisition moments;

a second processing unit configured to determine first information and second information according to the first image and the second image, wherein the first information represents a change status in external contours of the plurality of objects between the first image and the second image, and the second information represents a change status in internal textures of the plurality of objects between the first image and the second image; and

a third processing unit configured to determine whether any of the plurality of objects is moved according to the first information and the second information.

17. An electronic device, comprising: a processor and a memory for storing a computer program executable on the processor,
   wherein the processor is configured to execute steps of the method according to any one of claims 1 to 15 when running the computer program.

18. A storage medium, storing a computer program, wherein the computer program, when being executed by a processor, implements steps of the method according to any one of claims 1 to 15.

Acquire a first image and a second image of a target area 101

According to the first image and the second image, determine first information and second information 102

According to the first information and the second information, determine whether multiple objects are moved 103

FIG. 1

201

202

FIG. 2

301

FIG. 3

**FIG. 4**

**FIG. 5**

**FIG. 6**

**FIG. 7**

## INTERNATIONAL SEARCH REPORT

International application No.

**PCT/CN2023/073710**

| A. | CLASSIFICATION OF SUBJECT MATTER |
|---|---|
| | G06T7/20(2017.01)i |

According to International Patent Classification (IPC) or to both national classification and IPC

| B. | FIELDS SEARCHED |
|---|---|

Minimum documentation searched (classification system followed by classification symbols)

IPC:G06T,G06K

Documentation searched other than minimum documentation to the extent that such documents are included in the fields searched

Electronic data base consulted during the international search (name of data base and, where practicable, search terms used)

CNTXT, ENTXT, DWPI, VEN, ENTXTC, CNKI: 物品, 物体, 货物, 商品, 移, 搬, 拿, 丢失, 检测, 识别, 判定, 判断, 确定, 图像, 图片, 变化, 差异, 堆砌, 货架, 仓库, 自动售货, 售货机, 监控, 监视, 轮廓, 边缘, 纹理, 匹配, 栅格, object, freight, goods, commodity, move, carried, take, lost, detect, recognize, judge, identify, image, picture, change, difference, pile, shelves, warehouse, vending machine, monitor, outline, edge, texture, match, grid

| C. | DOCUMENTS CONSIDERED TO BE RELEVANT | | |
|---|---|---|---|
| Category* | Citation of document, with indication, where appropriate, of the relevant passages | | Relevant to claim No. |
| PX | CN 114708291 A (BEIJING JINGDONG QIANSHI TECHNOLOGY CO., LTD.) 05 July 2022 (2022-07-05) claims 1-18 | | 1-18 |
| Y | CN 111369529 A (MILESIGHT TECHNOLOGY CO., LTD.) 03 July 2020 (2020-07-03) description, paragraphs 43-61 | | 1-18 |
| Y | CN 113052838 A (RAJAX NETWORK TECHNOLOGY CO., LTD.) 29 June 2021 (2021-06-29) description, paragraphs 75-83 | | 1-18 |
| A | CN 109544631 A (GALAXY AEROSPACE (BEIJING) TECHNOLOGY CO., LTD.) 29 March 2019 (2019-03-29) entire document | | 1-18 |
| A | CN 109961101 A (BOE TECHNOLOGY GROUP CO., LTD.) 02 July 2019 (2019-07-02) entire document | | 1-18 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 April 2023** | **20 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2023/073710**

| C. | DOCUMENTS CONSIDERED TO BE RELEVANT | |
|---|---|---|
| Category* | Citation of document, with indication, where appropriate, of the relevant passages | Relevant to claim No. |
| A | US 9465994 B1 (AMAZON TECHNOLOGIES, INC.) 11 October 2016 (2016-10-11) entire document | 1-18 |

Form PCT/ISA/210 (second sheet) (July 2022)

INTERNATIONAL SEARCH REPORT
Information on patent family members

International application No.

**PCT/CN2023/073710**

| Patent document cited in search report | | | Publication date (day/month/year) | Patent family member(s) | | | Publication date (day/month/year) |
|---|---|---|---|---|---|---|---|
| CN | 114708291 | A | 05 July 2022 | None | | | |
| CN | 111369529 | A | 03 July 2020 | CN | CN111369529 | B | 14 May 2021 |
| CN | 113052838 | A | 29 June 2021 | None | | | |
| CN | 109544631 | A | 29 March 2019 | None | | | |
| CN | 109961101 | A | 02 July 2019 | WO | 2020199775 | A1 | 08 October 2020 |
| | | | | CN | 109961101 | B | 27 April 2021 |
| US | 9465994 | B1 | 11 October 2016 | US | 9830704 | B1 | 28 November 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210350472